# FASCICULE DE BREVET EUROPEEN

(11) **EP 1 997 169 B1**
(45) Date de publication et mention de la délivrance du brevet: **12.08.2015**
(21) Numéro de dépôt: 07701717.6
(22) Date de dépôt: 24.01.2007
(51) Int. Cl.: H01M 4/131, H01M 4/62, H01M 4/36, H01M 4/139, H01M 4/136, H01M 4/1391, H01M 4/40, H01M 4/58, H01M 10/052, H01M 10/0565, H01M 4/485

(54) **PARTICULES D'OXYDE METALLIQUE ENROBEES A FAIBLE TAUX DE DISSOLUTION, PROCEDES DE PREPARATION ET UTILISATION DANS LES SYSTEMES ELECTROCHIMIQUES**
BESCHICHTETE METALLOXIDPARTIKEL MIT GERINGER AUFLÖSUNGSRATE, HERSTELLUNGSVERFAHREN DAFÜR UND VERWENDUNG DAFÜR IN ELEKTROCHEMISCHEN SYSTEMEN
COATED METAL OXIDE PARTICLES WITH LOW DISSOLUTION RATE, METHODS FOR PREPARING THE SAME AND USE THEREOF IN ELECTROCHEMICAL SYSTEMS

(30) Priorité: 25.01.2006 CA 2534243
(43) Date de publication de la demande: 03.12.2008
(73) Titulaire: HYDRO-QUEBEC, Montréal Québec H2Z 1A4 (CA)
(72) Inventeur: CHAREST, Patrick, Ste-Julie, Québec J3E 1P2 (CA); PERRIER, Michel, Montréal, Québec H1T 3H8 (CA); DONTIGNY, Martin, Notre-Dame-du-Mont-Carmel QC G0X 3J0 (CA); PETITCLERC, Michel, Sainte-Julie QC J3E 3M7 (CA); GUERFI, Abdelbast, Brossard, Québec J4X 1W2 (CA); ZAGHIB, Karim, Longueuil, Québec J4M 2M7 (CA)
(74) Mandataire: Goulard, Sophie
(86) Numéro de dépôt international: PCT/CA2007/000091
(87) Numéro de publication internationale: WO 2007/085077

(56) Documents cités:
- WO-A1-97/20768
- WO-A2-03/063287
- KR-A- 20030 093 019
- US-A- 4 808 496
- US-A- 4 808 496
- US-A- 5 366 829
- US-A- 5 565 284
- US-A- 5 888 672
- US-A1- 2002 028 380
- US-A1- 2005 053 834
- US-B1- 6 174 623
- US-B1- 6 190 804
- US-B1- 6 190 804
- US-B1- 6 280 882

## Description

La présente invention est relative à un matériau d'électrode constitué par des particules comprenant un noyau, à base d'oxyde métallique acide, dont la surface est au moins partiellement recouverte par un polymère présentant une stabilité électrochimique supérieure à 3,7 Volts.

La présente invention concerne également les procédés permettant la préparation d'un mélange de ces particules et qui mettent notamment en oeuvre des étapes de mélange des constituants des particules.

Ces particules présentent l'avantage d'un faible taux de solubilité de l'oxyde métallique présent dans le noyau, et ce, même après avoir été soumises à un nombre important de cycles électrochimiques.

Parmi les nombreuses applications possibles pour le matériau d'électrode de l'invention, on peut mentionner le recouvrement des supports d'électrodes. Les électrodes ainsi obtenues sont particulièrement stables en fonctionnement et peuvent ainsi être avantageusement utilisées dans des systèmes électrochimiques hautement performants.

Les électrodes et les générateurs ainsi obtenus constituent également un objet de la présente invention, de même que les procédés pour la préparation des électrodes et générateurs de l'invention.

### HISTORIQUE

Le document "Study of Mn dissolution from LiMn2O4 spinel electrodes using in situ total reflection X-ray fluorescence analysis and fluorescence XAFS technique" de Yasuko Terada dans Journal of Power Sources 97-98 (2001), pages 420-422, met ainsi en évidence le phénomène de dissolution des oxydes LiMn₂O₄ dans des batteries secondaires et la perte de capacité qui en résulte.

Le document "In situ XAFS study of the electrochemical deintercalation of Li from Li1-xMn2-yCr04" de Izumi Nakai et al. dans Journal of Power Sources 97-98 (2001), pages 412-414, décrit également le phénomène de dissolution de l'oxyde métallique et propose de remédier partiellement à l'instabilité de la structure par la substitution partielle de Mn par Cr, Co ou Ni. Cette technique s'avère complexe et présente des inconvénients du fait qu'elle nécessite une nouvelle synthèse et l'ajustement du dopant de façon que la structure soit électrochimiquement stable.

Le document "Influence of the particle size on the electrochemical properties of lithium manganese oxide" de Chung-Hsin Lu et al. dans Journal of Power Sources 97-98 (2001), pages 458-469, met en évidence le rôle joué par la taille des particules des oxydes lithium manganèse sur les valeurs de capacité spécifique et sur l'efficacité coulombienne des particules d'oxyde métallique lithium manganèse.

Le brevet US 6,174,623 décrit des particules de matières actives d'électrode positive comportant une revêtement conducteur constitué d'une polymère conducteur d'un point de vue électronique, tel que la polyaniline par exemple.

Au cours des dernières années, l'intérêt, commercial des oxydes métalliques tels LiV₃O₈, V₂O₅ et LiMn₂O₄ comme éléments constitutifs et fonctionnels de systèmes électrochimiques, a été très limité. Cette limitation provient notamment de la faible stabilité des oxydes métalliques dans le cadre de cycles charges décharges et des pertes sensibles de performances qui en résultent.

Il existait donc un besoin pour valoriser de tels oxydes métalliques considérés comme instables, notamment ceux présentant de bonnes propriétés électrochimiques, tels LiMn₂O₄, LiV₃O₈, et des coûts de production modérés, notamment en raison d'une abondance naturelle particulière.

### SOMMAIRE

Un premier objet de la présente invention est constitué par un matériau d'électrode constitué par des particules comprenant un noyau et un enrobage qui recouvre au moins en partie, de préférence au moins 80 %, plus préférentiellement encore au moins 90 % et selon le mode le plus avantageux 100 % de la surface dudit noyau, lesdites particules étant caractérisées en ce que:
- ledit noyau est composé de préférence pour au moins 90 %, plus préférentiellement encore pour au moins 94 % en poids d'un oxyde métallique choisi dans le groupe constitué par LiMn₂O₄, V₂O₅, LiMn₍₂₋ₓ₎VₓO₄ 0≤x≤1, V₆O₁₃ et LiV₃O₈ ;
- l'enrobage du noyau est à base d'un polymère dont la stabilité électrochimique est supérieure ou égale à 3,7 Volts, ledit polymère étant un polymère non conducteur électronique choisi parmi les polymères à 3 branches ou à 4 branches et
- l'enrobage a une épaisseur moyenne préférentiellement comprise entre 500 manomètres et 2 micromètres et le noyau recouvert est d'une taille moyenne
- d₅₀ qui est de préférence comprise entre 500 nanomètres et 40 micromètres, plus préférentiellement encore cette taille est comprise entre 2 et 20 micromètres.

Selon un mode avantageux de réalisation de l'invention, le polymère utilisé pour réaliser l'enrobage est de préférence chimiquement stable, ou très stable, voir même extrêmement stable.

De préférence, la stabilité électrochimique du polymère utilisé pour l'enrobage est comprise entre 3,75 et 5 Volts.

Préférentiellement l'oxyde métallique est LiV₃O₈.

Selon une variante avantageuse, le noyau des particules comporte de 1 à 12 %, de préférence de 6 à 10 % en poids d'un carbone choisi de préférence dans le groupe constitué par le noir d'éthylène, le graphite naturel, le graphite artificiel, le carbone de Shawinigan, le carbone de Ketjen, et les mélanges d'au moins deux de ces derniers.

Le polymère non conducteur électronique est d'au moins 3 branches, et plus préférentiellement encore de type 4 branches tels ceux décrits dans la demande internationale publiée le 31 juillet 2003 sous WO 03/063287 (et plus particulièrement en pages 5, 8 et 9), déposée au nom d'Hydro-Québec, ainsi que dans les colonnes 1 et 2 du brevet américain US-A-6,190,804 (Ishiko et al.) et qui présentent des terminaisons hybrides acrylates (de préférence méthacrylates) et alkoxy (de préférence alkoxy avec de 1 à 8 atomes de carbone, plus préférentiellement encore méthoxy ou éthoxy), ou : encore vinyle.

Avantageusement, l'oxyde métallique peut être un mélange (50: 50) de LiV₃O₈ et de V₂O₅.

Une autre sous-famille avantageuse de particules de l'invention peut être constituée par les particules comportant un noyau de l'oxyde métallique LiV₃O₈ d'une taille de 5 microns, recouverte pour 80 % de sa surface par un enrobage constitué du polymère de type 4 branches et d'une épaisseur moyenne comprise entre 10 nanomètres et 5 micromètres, de préférence comprise entre 15 nanomètres et 2 micromètres, caractérisée par un ts inférieur à 5 %.

Une autre sous-famille avantageuse de particules de l'invention peut être constituée par les particules comportant un noyau d'oxyde métallique V₂O₅ d'une taille de 5 micromètres, recouvert pour 80 % de sa surface par un enrobage constitué du polymère 4 branches et d'une épaisseur moyenne comprise entre 10 nanomètres et 5 micromètres, de préférence comprise entre 15 nanomètres et 2 micromètres, caractérisée par un ts inférieur à 4 %.

Un deuxième objet de la présente invention est constitué par un procédé de préparation d'un matériau d'électrode selon le premier objet de l'invention.

La préparation peut se faire avantageusement par mélange du polymère et d'un oxyde métallique, par voie sèche sans aucun ajout de solvant, de préférence dans des proportions en poids de 10 à 90 %, de préférence de 40 à 80 % pour chacun des constituants du mélange, de préférence la quantité d'oxyde métallique présent dans le mélange est supérieure à celle du polymère.

La préparation peut également se faire par mélange homogène de particules selon le premier objet de l'invention, dans lequel le mélange se fait :
- par préparation d'un mélange du polymère et d'un oxyde métallique, de préférence dans des proportions en poids de 10 à 90 %, de préférence de 40 à 80 % pour chacun des constituants du mélange, de préférence la quantité d'oxyde métallique présent dans le mélange est supérieure à celle du polymère; et
- avec ajout dans le solvant d'au moins un solvant choisi dans le groupe constitué par l'acétone, l'acétonitrile, le toluène, MEK, NMP ou les mélanges d'au moins deux de ces derniers, de préférence le solvant utilisé représente en volume de 10 à 80 %, plus préférentiellement de 20 à 70 % du volume total du solvant et du mélange.

Avantageusement, le mélange peut se faire par "ball milling", "sand mill", HEBM ("Hot Electron Bolometer Mixer"), mécanofusion, "agglomaster", Nobita^{®} ou par mise en oeuvre d'au moins deux de ces techniques, de préférence à une température comprise entre 10 et 40°C et, avantageusement, en présence d'un gaz inerte choisi dans le groupe constitué par l'azote, l'argon ou l'air sec.

Un troisième objet de la présente invention est constitué par les électrodes constituées d'un support d'électrode, ledit support étant de préférence fait d'un matériau métallique ou d'un matériau plastique conducteur, et au moins partiellement recouvert, de préférence de façon homogène par un mélange constitué d'au moins 40 %, de préférence de 50 à 80 % en poids du matériau d'électrode défini dans le premier objet de l'invention ou obtenu par un des procédés définis dans le second objet de l'invention.

De préférence, dans les électrodes de l'invention, au moins un polymère est un liant de ladite électrode en créant des ponts entre le support d'électrode, les particules à base d'oxyde métallique et l'enrobage à base de polymères.

Avantageusement, le polymère liant peut être un mélange d'un polymère d'enrobage à haute stabilité et à caractère liant et d'un polymère liant (polymère qui lie les particules dans la cathode) différent du polymère présent dans l'enrobage.

De préférence, le polymère liant peut être uniquement constitué par un polymère d'enrobage à haute stabilité électrochimique.

Selon un mode avantageux de réalisation de l'invention, les électrodes peuvent comprendre au moins un polymère contenant au moins un sel de lithium et au moins un carbone de surface spécifique supérieure ou égale à 1 m²/g, de préférence de surface spécifique supérieure à 50 m²/g.

De préférence, le mélange (polymère-oxyde-sel-carbone) est réalisé sans ajout de solvant, avantageusement par mise en oeuvre de la méthode du Doctor Blade et/ou par extrusion.

Selon un autre mode avantageux de réalisation, le mélange (polymère-oxyde-sel-carbone) est réalisé avec ajout de solvant choisi de préférence dans le groupe constitué par l'acétone, l'acetonitrile, le toluène, MEK, VC, DEC, DMC, EMC, DME ou les mélanges d'au moins deux de ces derniers, de préférence par mise en oeuvre de la méthode du Doctor Blade et/ou par extrusion.

Avantageusement, la composition du polymère peut représenter de 1 à 70 % en poids par rapport au poids total du mélange (polymère + sel + oxyde + carbone).

Les électrodes dans lesquelles la composition du carbone représente de 1 à 10 % en poids par rapport au poids total du mélange (polymère + sel + oxyde + carbone) sont particulièrement intéressantes.

De préférence, la concentration du sel, présent dans le mélange (polymère-oxyde-sel-carbone), et exprimée par rapport au polymère, est comprise entre 0,1 M et 3 M, de préférence entre 0,7 M et 2 M.

Une autre famille d'électrodes de l'invention peut être constituée par les électrodes, dans lesquelles le carbone, présent dans le mélange (polymère-oxyde-sel-carbone), est un mélange d'un premier carbone de nature graphite avec une surface spécifique inférieure à 50 m²/g et d'un second carbone de type grande surface non-graphitique dont la surface spécifique est supérieure à 50 m²/g; la surface spécifique est mesurée selon la méthode BET.

Avantageusement, le carbone présent dans l'électrode est de type fibre de carbone VGCF, Ex mésophase; PAN (polyacronitryle).

De façon préférentielle, dans l'électrode, le sel est dissous dans le polymère et est choisit dans le groupe constitué par LiFSI, LiTFSI, LiBETI, LiPF₆ et les mélanges d'au moins deux de ces derniers.

Selon un mode avantageux de réalisation, un mélange liquide oxyde-polymère-sel-carbone peut être épandu sur un collecteur de courant de type métallique par extrusion ou par "Doctor Blade", "slot die", "coma".

Selon un mode avantageux de réalisation, le polymère peut être de type à quatre branches avec de préférence au moins deux branches susceptibles de donner lieu à une réticulation, et il est transformé en matrice polymère, éventuellement en présence d'un solvant organique, par réticulation après épandage du mélange sur le support d'électrode.
La réticulation peut avantageusement être conduite sans ajout d'un agent de réticulation autre que l'oxyde métallique.

Selon une autre variante avantageuse, le polymère peut être de type EG, avec de préférence au moins deux branches susceptibles de donner lieu à une réticulation, et il est transformé en matrice polymère, éventuellement en présence d'un solvant organique, par réticulation après épandage du mélange sur le support d'électrode.

Un cinquième objet de la présente invention est constitué par un générateur électrochimique comportant au moins un matériau d'électrode tel que défini selon le premier objet de l'invention.

Avantageusement, le générateur électrochimique est de type générateur de lithium et la cathode épandue peut être introduite dans ledit générateur de lithium avec un polymère sec comme électrolyte, la batterie ne contient aucun solvant liquide.

Selon un mode avantageux de ces générateurs électrochimiques, l'électrolyte est constitué de la même matière que le liant et que l'enrobage.

Avantageusement, l'électrolyte :
- est constitué d'une matière différente de celle qui constitue le liant et/ou l'enrobage; et/ou
- assure aussi le rôle de séparateur et il est constitué d'un polymère sec qui présente une stabilité électrochimique supérieure à 3,7 Volts; et/ou
- assure aussi le rôle de séparateur et il est constitué d'un polymère sec qui présente une stabilité électrochimique inférieure à 3,7 Volts.

Avantageusement :
- l'anode est de type lithium ou alliage de lithium ou carbone, graphite, fibre de carbone, Li₄Ti₅O₁₂, WO₂, de préférence lithium métallique ou légèrement allié; et/ou
- le lithium est allié avec Al, Sn, carbone, Si, Mg et la teneur de métaux allié est supérieure à 50 ppm, de préférence supérieure à 500 ppm.

Un générateur, tel que défini dans le cinquième objet de la présente invention, peut être utilisé dans un véhicule électrique, dans un véhicule hybride, dans les télécommunications, UPS, et dans les dispositifs électrochromes.

### DESCRIPTION BRÈVE DES DESSINS

La Figure 1 illustre le phénomène de dissolution observé pour de petites particules, non enrobées, à base de vanadium oxyde lithié et de formule LiV₃O₈.
La Figure 2 illustre le phénomène de dissolution de grosses particules, non enrobées, à base de vanadium oxyde lithié.
La Figure 3 illustre le mécanisme de formation général ,de dendrites, lors de la dissolution d'un oxyde métallique acide dans un système électrochimique de type batterie au lithium polymère solide.
La Figure 4 visualise le comportement d'une électrode selon l'invention, dans laquelle les particules de l'oxyde métallique ont été enrobées par un polymère stable qui ralentit la dissolution du vanadium dans l'électrode.
La Figure 5 illustre le dispositif utilisé pour détecter le courant d'oxydation d'un oxyde métallique et pour quantifier la limite du voltage de fonctionnement du polymère.
La Figure 6 donne les résultats, sous forme de courbes, de la mesure de la stabilité de particules d'oxydes métalliques LiV₃O₈ enrobées respectivement par un polymère polyéther avec un poids moléculaire MW de 70000, dans le premier cas, et par un polymère à 4 branches, dans le deuxième cas.
La Figure 7 représente l'évolution de la stabilité chimique du polymère polyéther avec un poids moléculaire MW de 70000, pour un traitement thermique de 1 journée, 3 journées, puis 1 semaine, et 2 semaines.
La Figure 8 représentent l'évolution de la stabilité chimique du polymère ERM-4B qui est un macromonomère à quatre branches, d'un poids moléculaire moyen MW de 10000, d'une viscosité de 3,5 Pa.sec à 25°C et caractérisé par un nombre de fonctions acrylate par molécule qui est de 3, pour un traitement thermique d'une durée de 3 jours, les différentes courbes correspondant à des mesures de stabilité réalisées pour un traitement thermique de 1 journée, 3 journées, puis 1 semaine, 2 semaines et à la constatation de la réticulation.
La Figure 9 représente l'évolution de la stabilité chimique du polymère EG-2500 commercialisé sous la marque Elexcel, qui est un macromonomère hyperbranché, polyoxyalkylène glycol acrylate dont le nombre de groupe acryl par molécule est de 1,5, d'un poids moléculaire moyen MW de 2500 et qui est caractérisé par une viscosité de 0,3 Pa.sec à 25°C, les différentes courbes correspondant à des mesures de stabilité réalisées pour un traitement thermique de 1 journée, 3 journées, puis 1 semaine, et 2 semaines, ainsi qu'à la constatation de la réticulation.

### DESCRIPTION DÉTAILLÉE DES RÉALISATIONS PRÉFÉRÉES

Tel qu'utilisé dans le cadre de cette divulgation, l'expression "polymère salé" se dit d'un polymère qui contient un sel tel que le un polymère salé par au moins un sel choisi dans le groupe constitué par les sels de type LiFSI, LiTFSI, LiBETI, LiDCTA, LiBF₄ et LiPF₆.

Tel qu'utilisé dans le cadre de cette divulgation, l'expression "stabilité électrochimique" correspond à la fenêtre de stabilité du polymère; en dehors de cette fenêtre, le polymère se dégrade.

Tel qu'utilisé dans le cadre de cette divulgation, l'expression "polymères à 3 branches" est apparentée, comme illustré dans le document "Relationship between Structural Factor of Gel Electrolyte and Characteristics of Electrolyte and Lithium-ion Polymer Battery Performances" par Hiroe Nakagawa et al., The 44th Symposium in Japan, Nov 4-6, 2003, abstract 3D26, à des polymères à trois branches qui ont la forme d'un peigne à 3 branches. Les 3 branches sensiblement parallèles de ces polymères sont fixées de préférence au centre et aux deux extrémités d'un squelette de petite taille, comportant de préférence 3 atomes, de préférence 3 atomes de carbone, dans la chaîne.

Dans le cas d'une chaîne à 3 atomes de carbones, chacun de ces atomes est relié à une branche.

Parmi ces polymères à 3 branches, et dans le cadre de la présente invention, on préfère ceux qui présentent un poids moléculaire moyen (MW) variant de 1000 à 1000000, plus préférentiellement encore ceux dont le poids moléculaire moyen varie de 5000 à 100000.

Tel qu'utilisé dans le cadre de cette divulgation, l'expression "polymères à quatre branches" est apparentée à la demande de brevet WO 03/063287 précitée, qui est incorporée par référence à la présente demande, qui décrit une famille préférentielle de polymères à quatre branches.

De tels polymères ont la forme d'un peigne à 4 branches. Les 4 branches sensiblement parallèles de ces polymères sont fixées respectivement entre les deux extrémités (de préférence fixées sur la chaîne de façon symétrique) et aux deux extrémités d'une chaîne de petite taille, constitué de préférence d'une chaîne comportant 4 atomes qui sont de préférence 4 atomes de carbone.

Dans le cas d'une chaîne à 4 atomes de carbones, chaque atome est relié à une branche.

De tels polymères possèdent de préférence des terminaisons hybrides, plus préférentiellement encore des terminaisons hybrides acrylates (de préférence méthacrylate) et alkoxy (de préférence alkoxy avec de 1 à 8 atomes de carbone, plus préférentiellement encore méthoxy ou éthoxy), ou encore vinyl, une branche au moins dudit polymère à quatre branches (et de préférence au moins deux branches) étant susceptible de donner lieu à une réticulation.

De préférence, le polymère à quatre branches est un de ceux définis dans les colonnes 1 et 2 du brevet américain US-A-6,190,804 précité, qui est incorporé par référence à la présente demande.

Ce polymère est préférentiellement un polymère en étoile de type polyéther qui possède au moins quatre branches ayant des terminaisons contenant les fonctions suivantes : acrylate ou méthacrylate et alkoxy, allyloxy et/ou vinyloxy, dont au moins une, et de préférence dont au moins deux de ces fonctions sont actives pour permettre une réticulation.

D'autres familles de poiyéthers dont la masse moléculaire est supérieure ou égale à 30000 sont avantageusement utilisées dan le cadre de la présente invention.

Selon un autre mode préférentiel de réalisation de la présente invention, le polymère à 4 branches est un polymère tétrafonctionnel de préférence à haut point moléculaire répondant à la formule (I) : 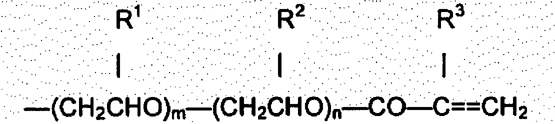 dans laquelle R¹ et R² représentant chacun un atome d'hydrogène ou un alkyl inférieur (de préférence de 1 à 7 atomes de carbones); R³ représente un atome d'hydrogène ou un groupe méthyl; m et n représentent chacun un entier supérieur ou égal à 0; dans chaque chaîne à haut point moléculaire, m+n > 35, et chacun des groupes R¹, R², R³ et chacun des paramètres m et n peuvent identiques ou différents dans les 4 chaînes à haut point moléculaire.

Parmi ces polymères à quatre branches, ceux qui possèdent un poids moléculaire moyen compris entre 1000 et 1000000, plus préférentiellement encore ceux qui ont un poids moléculaire moyen variant de 5000 à 100000 sont particulièrement intéressants.

Selon un autre mode préférentiel, on retient les polyéthers de type étoile d'au moins quatre branches avec une terminaison hybride (acrylate ou méthacrylate et alkoxy, allyloxy, vinyloxy). Son voltage de stabilité est nettement supérieur à 4.

Également les polymères vinyliques de type EG et plus particulièrement ceux décrits dans la demande de brevet publiée sous EP-A-1,249,461 (Wendel et al.), qui est incorporée par référence à la présente demande, sont d'un intérêt particulier comme matériau de protection. Particulièrement avantageux parmi ces polymères sont ceux dont le poids moléculaire moyen varie de 600 à 2500.

Des polymères de cette famille peuvent avantageusement êtres obtenus en faisant réagir l'oxyde d'éthylène et le propanol-1-époxy-2,3 avec le matériau de départ, ou en faisant réagir le propanol-1-époxy-2,3 avec l'éthylène glycol comme matériau de départ pour produire un composé polymère. Cette étape est suivie par l'introduction de groupes fonctionnels polymérisables et/ou non-polymérisables à chaque extrémité d'un squelette et des chaînes latérales dans le composé polymère résultant.

Les composés ayant un ou plusieurs résidus hydrogènes actifs et alkoxyde peuvent aussi être utilisés comme matériaux de départ.

Des exemples de résidus hydrogènes actifs pour le composé ayant un ou plusieurs résidus hydrogènes actifs incluent le groupe des hydroxyles, ayant de préférence de 1 à 5 résidus hydrogènes actifs. Des exemples spécifiques des composés ayant un ou plusieurs résidus hydrogènes actifs incluent le monométhyléther de triéthylèneglycol, l'éthylèneglycol, la glycérine, la diglycérine, le pentaérythritol et leurs dérivés.

Des exemples spécifiques d'alkoxyde incluent aussi CH₃ONa, t-BuOK et leurs dérivés.

Les composés polymères polyéther de l'invention ont l'unité de structure représentée par la formule (1) ainsi que l'unité de structure représentée par la formule (2) et/ou l'unité de structure représentée par la formule (3). Le nombre d'unités de structure représentée par la formule (1) dans une molécule est de 1 à 22800, plus avantageusement de 5 à 11400, et plus avantageusement encore de 10 à 5700. Le nombre d'unités de structure de la formule (2) ou (3) (mais quand les deux sont incluses, c'est le nombre total) est de 1 à 13600, plus avantageusement de 5 à 6800, et plus avantageusement encore de 10 à 3400 ainsi que dans une molécule.

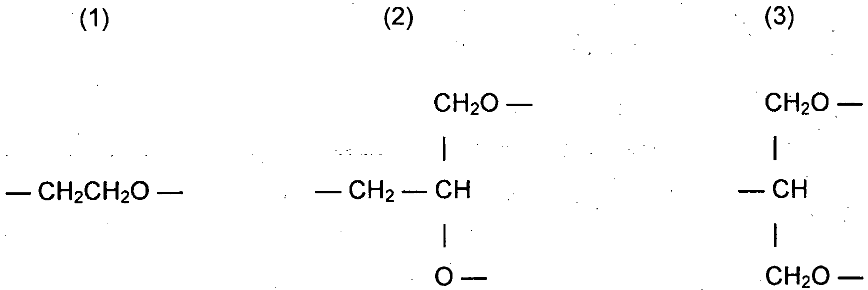

Des exemples de groupes fonctionnels polymérisables introduits à chaque extrémité moléculaire incluent les résidus (méth)acrylates, les groupes allyl et les groupes vinyls, et des exemples de groupes fonctionnels non-polymérisables incluent les groupes alkyl ou les groupes fonctionnels comprenant des atomes de bore.

Comme les groupes alkyles ci-dessus, les groupes alkyles ayant de 1 à 6 atomes de carbones sont avantageux, ceux ayant de 1 à 4 atomes de carbones sont plus avantageux, et les groupes méthyles sont spécialement avantageux.

Des exemples de groupes fonctionnels comprenant des atomes de bore incluent ceux représentés par les formules suivantes (4) ou (5) :

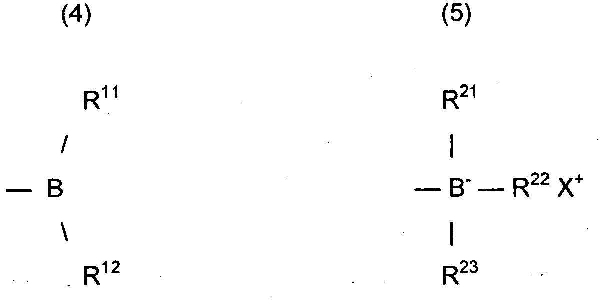

R¹¹, et R¹² dans la formule (4) et R²¹, R²², R²³ dans la formule (5) peuvent être identiques ou différents, et chacun représente un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique, -B(R^{a}) (R^{b}),-OB(R^{a}) (R^{b}) ou OSi(R^{a})(R^{b})(R^{c}). (R^{a}), (R^{b}) et (R^{c}) représentent chacun un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique ou dérivés de ceux-ci. R¹¹, et R¹² dans la formule (4) et R²¹, R²², R²³ dans la formule (5) peuvent être lié ensemble pour former un anneau, et l'anneau peut avoir des substituants. Chaque groupe peut aussi être substitué par des groupes substituables. De plus, X⁺ dans la formule (5) représente un ion métallique alcalin, et est avantageusement un ion lithium.

Les extrémités des chaînes moléculaires dans le polymère polyéther peuvent toutes être des groupes fonctionnels polymérisables, des groupes fonctionnels non-polymérisables, ou peuvent inclure les deux.

Le poids moléculaire moyen (MW) de ce type de composé polymère polyéther n'est pas spécialement limité, mais il est habituellement d'environ 500 à 2 millions, et avantageusement d'environ 1000 à 1,5 millions.

Les polymères de ces familles préférentielles sont par ailleurs avantageusement choisis parmi les polymères qui sont réticulables par ultraviolet, infrarouge, traitement thermique et/ou faisceau d'électron ("EBeam").

Selon l'invention, il a été découvert de façon inattendue que la nature acide ou basique d'un oxyde métallique influence grandement sa stabilité. Ainsi les oxydes solubles tel que LiV₃O₈ et V₂O₅ s'avèrent présenter généralement des pH acides, alors que les oxydes non solubles tels que LiFePO₄ et LiCoO₂ s'avèrent présenter des pH basiques.

Le Tableau I montre quelques valeurs de pH pour les oxydes métalliques LiV₃O₈ et LiCoO₂, en présence de quantités variables de carbone, mélangé avec l'oxyde. Le pH a été mesuré par mise en oeuvre de la méthode ci-après définie.

**Tableau I**

| Essai | Oxyde | Ketjen (%W) | Carbone (W%) | Temps d'échantillonnage | pH | Couleur |
|---|---|---|---|---|---|---|
| | | pH=10,6 | pH=8,2 | | | |
| 1 | LiV₃O₈ | 5 | | 30 | 4,52 | Jaune |
| 2 | LiV₃O₈ | 3,75 | | 30 | 4,44 | Jaune |
| 3 | Liv₃O₈ | 2,5 | 2,5 | 30 | 5,5 | Jaune |
| 4 | LiFePO₄ | 5 | | 30 | 10,1 | Incolore |
| 5 | LiFePO₄ | 3,75 | | 30 | 10,06 | Incolore |
| 6 | LiFePO₄ | 2,5 | 2,5 | 30 | 10,04 | Incolore |
| 7 | LiFePO₄ | | | 30 | 9,9 | Incolore |
| 8 | LiCoO₂ | | | 30 | 8,6 | Incolore |

Selon l'invention, il a été également découvert qu'un enrobage par un polymère particulier permettait d'améliorer très sensiblement la stabilité des particules d'oxyde métalliques à pH acide.

En effet, les difficultés rencontrées avec les oxydes métalliques solubles ont été résolues par la méthode ci-après explicitée et qui est conforme à l'idée principale de l'invention qui consiste à enrober la particule d'oxyde métallique stable par un polymère de nature particulière.

Ainsi, à titre d'exemple, on protège les particules de LiV₃O₈ en les enrobant d'un polymère d'une stabilité électrochimique supérieure ou égale à 3,7 Volts.

Les polymères utilisés pour réaliser l'enrobage sont de préférence de type polyéthermulti branches ou hyper branches, en particulier ceux synthétisés par la société DKS et décrits dans le brevet US-A-6,190,804 qui est incorporé par référence à la présente demande.

Ces polymères sont de préférence salés par au mois un sel de type LiFSI, LiTFSI, LiBETI, LiBF₄, LiPF₆. Pour l'enrobage des particules d'oxyde, on utilise de préférence un mélange (polymère-avec au moins un sel) qui est liquide à température ambiante.

Selon un mode avantageux de réalisation de l'invention, l'enrobage des particules d'oxyde métallique se fait par l'une des méthodes suivantes ou par combinaison d'au moins deux des méthodes : "ball milling"; "jar milling"; HEBM ("High Energy Ball Milling"); mécanofusion; en mettant en oeuvre le dispositif Nobulta commercialisé par la compagnie Hosokawa, Japon; "Aggolmaster"; et "pebble mill".

L'enrobage de l'oxyde peut être réalisé par plusieurs méthodes, avec ou sans solvant.

Le polymère salé enrobant les particules d'oxyde joue de multiples rôles. Son premier rôle est d'assurer la non dissolution de l'oxyde métallique, tel LiV₃O₈. Son second rôle est celui de liant, entre les particules d'oxyde présentes dans la solution d'épandage de la cathode, par exemple sur un support en aluminium. Le troisième rôle est d'assurer la conductivité ionique du sel, entre les particules, et au travers du séparateur.

Les paramètres suivants, relatifs à la nature du polymère utilisé pour réaliser l'enrobage, jouent un rôle important dans la stabilité i.e. dans la faible dissolution de l'oxyde métallique acide :
- la stabilité électrochimique;
- la stabilité chimique du polymère; et
- le caractère conducteur ou non conducteur.

Les différentes méthodes mises en oeuvre pour la quantification des différents paramètres des polymères utilisés pour réaliser l'enrobage des particules d'oxyde métallique et pour évaluer la stabilité des particules de l'invention sont ci-après définies.

### Méthode de mesure du pH de l'oxyde métallique

Le pH de l'oxyde métallique représente la valeur mesurée, à l'aide d'une électrode classique en verre, dans une solution aqueuse de l'oxyde obtenue par dissolution, dans les conditions normales de température et de pression, de 0,15 grammes de l'oxyde dans 10 cc d'eau. On laisse reposer pendant une semaine dans les conditions normales de température, puis on agite juste avant de prendre la mesure avec un appareil OAKTON série 2100, commercialisé par la société OAKTON. Dans le cadre de la présente invention, on classifie comme oxyde métallique acide tout échantillon dont le pH est inférieur à 7.

On remarque que la nature et le pourcentage du carbone présent dans le mélange (carbone - oxyde métallique) influence la valeur du pH; celle-ci diffère plus ou moins sensiblement de celle de l'oxyde métallique seul. Ce paramètre peut être utilisé pour améliorer la stabilité des oxydes métalliques.

Afin de réduire la solubilité et ainsi augmenter le pH de l'oxyde, la méthode particulière suivante de revêtement des particules d'oxyde par du carbone est préférée. La poudre d'oxyde est enrobée par un polymère, à base de PEO, polyacrylonitrile, PMMA et/ou PVC solubilisé dans un solvant (acétonitrile, eau, acétone, méthanol ...). Ensuite la composition est séchée puis carbonisée à une température d'environ 600-700°C sous une atmosphère inerte et pendant 8-12 heures. La quantité du polymère utilisé est reliée au taux de carbone résiduel présent à la surface des particules de l'oxyde. Le mélange oxyde et solution de polymère peut être réalisé par "jar mill", "ball mill", ou mélangeur à peinture.

Il a été mis en évidence que les oxydes solubles présentent généralement des pH acides, alors que les oxydes non solubles tels que LiFePO₄ et LiCoO₂ présentent des pH basiques.

Il a été également découvert que l'instabilité marquée constatée pour les oxydes métalliques à caractère acide, présents dans des système électrochimiques, se concrétise par une migration de l'espèce soluble jusqu'à l'anode tout en traversant l'électrolyte et les films de passivation positionnés sur l'anode.

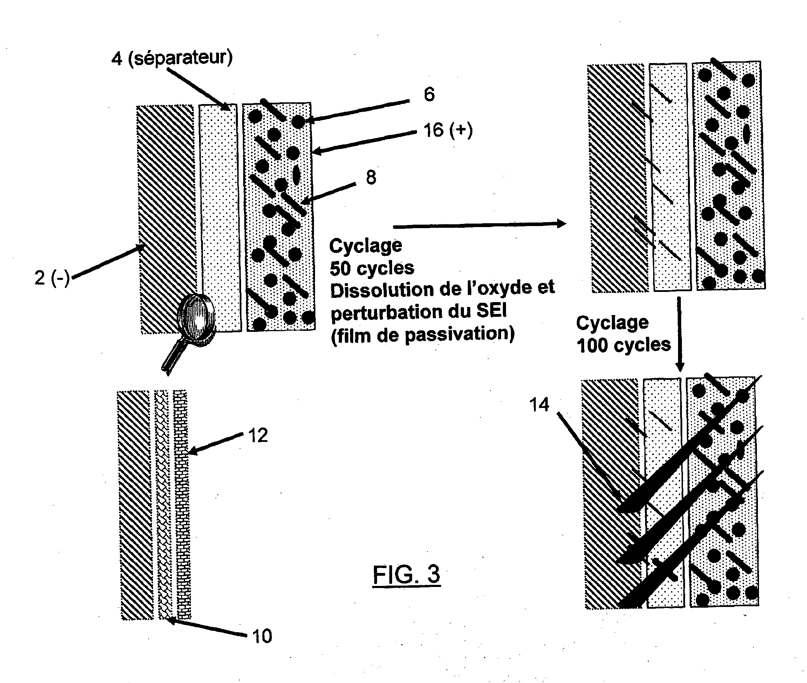

Ce phénomène négatif de dissolution de l'oxyde métallique et de formation de dendrites réduit considérablement les propriétés physico-chimiques des films de passivation. Ce phénomène est visualisé dans la Figure 3 qui montre le fonctionnement de la pile et le schéma de lithium métal non contaminé. Cette conclusion est directement dérivée des résultats expérimentaux de XPS ("X-Ray-Photoelectron Spectroscopy"), après dissolution de vanadium qui migre à travers l'électrolyte solide polymère (SPE).

La Figure 3 illustre notamment le mécanisme de formation général de dendrites, lors de la dissolution d'un oxyde métallique acide dans un système électrochimique de type batterie au lithium polymère solide. SPE signifie Solid Polymer Electrolyte et SEI signifie Solid Electrolyte Interface (film de passivation). Les particules d'oxyde métallique, initialement présentes uniquement dans la cathode, ont sensiblement diminué de taille au cours des 50 premiers cyclages et ont partiellement migré dans le SPE et dans l'anode de lithium. Après 100 cyclages, des dendrites de l'oxyde se sont formées. Ces dendrites s'étendent du lithium métallique au séparateur de lithium, tout en perçant l'électrolyte. Les références utilisées dans la Figure 3 sont : 2 pour lithium (négative), 4 pour SPE ("Solid Polymer Electrolyte" - séparateur), 6 pour carbone, 8 pour oxyde de vanadium, 10 pour Li₂O, 12 pour Li₂CO₃, 14 pour dendrite et 16 pour cathode.

Un métal de l'oxyde soluble réagit avec le lithium du film de passivation pour le rendre conducteur électronique et augmente son épaisseur. La formation de dendrites peut résulter dans le perçage du SPE. Et, lorsque les dendrites atteignent une certaine taille, elles peuvent toucher la cathode en créant ainsi un court circuit qui fait mourir la batterie.

Les mesures réalisées avec une batterie Lithium polymère de type laboratoire de 4 cm² de surface montrent que, lors du cyclage, en particulier à un courant élevé supérieur à C/1 (décharge en 1 heure), aucune dissolution ne se manifeste pour les oxydes non solubles qui sont à caractère basique, alors qu'au même courant les oxydes solubles se dissolvent.

### Méthode de mesure de la stabilité électrochimique l'oxyde métallique

Cette stabilité est mesurée par la méthode mise au point par le déposant à l'aide du dispositif représenté dans la Figure 3. Un Mac pile est utilisé avec un mode potentiostatique pour caractériser les matériaux en stabilité électrochimique. Il s'agit d'un test de cyclovoltamétrie lente. On considère lorsque la vitesse de balayage est de 10 mV/h que le matériau se trouve toujours à son état thermodynamique stable. Les pics de courant générés se trouvent donc dans des régions où il n'y a pas d'activité électrochimique. La dégradation du matériau se trouve dans des régions où il n'y a pas d'activité électrochimique du matériau. La dégradation peut s'intensifier, en fonction du voltage, pour former un mur électrochimique non réversible.

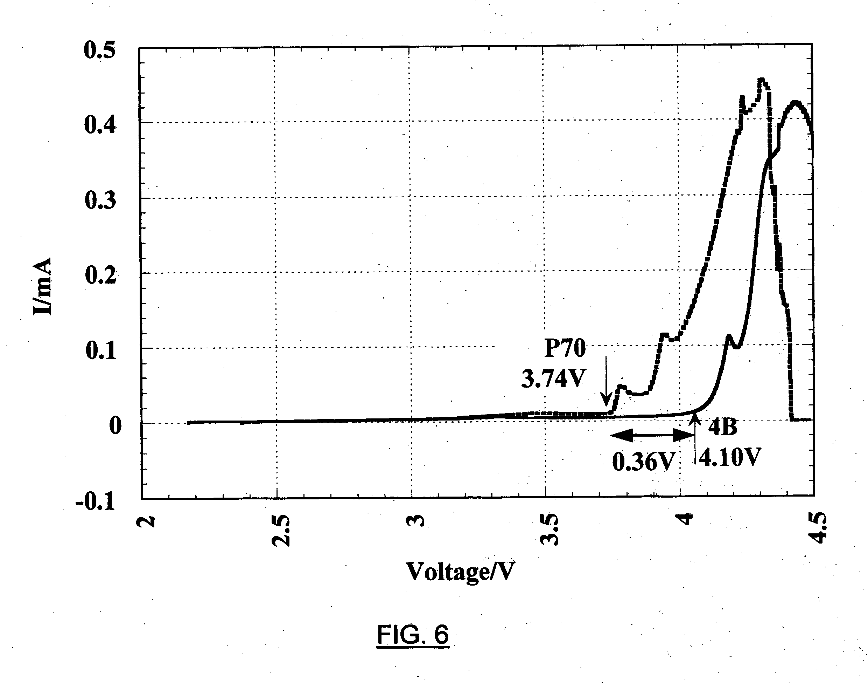

Une courbe de dégradation du polymère est représentée par la Figure 6. Le début du mur d'oxydation exprime la limite de stabilité du polymère. C'est grâce à l'électrode de carbone de haute surface spécifique, tel que Ketjen ou Shawinigan, que la stabilité électrochimique peut facilement être mesurée et la dégradation du polymère détectée.

### Méthode de mesure de la stabilité électrochimique d'un polymère

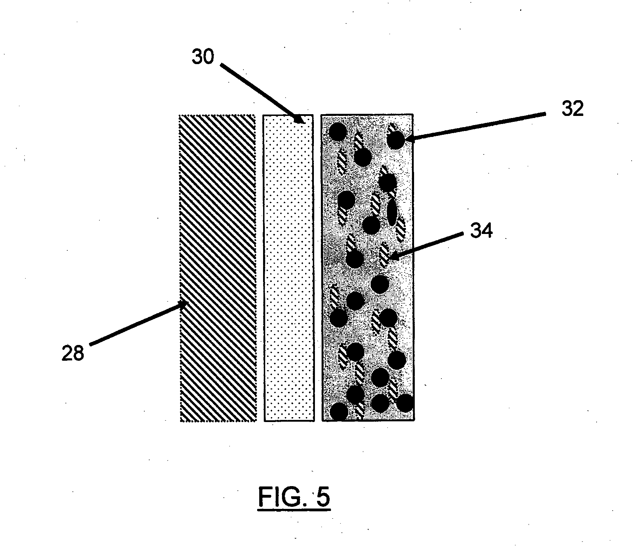

Pour détecter la limite du voltage de fonctionnement du polymère avec le courant d'oxydation, on utilise la méthode électrochimique qui est déjà utilisée dans la demande internationale publiée sous WO/2003/063287 (qui est incorporée par référence à la présente demande), au nom d'Hydro-Québec, et on la met en oeuvre à l'aide du dispositif représentée dans la Figure 5.

La Figure 5 illustre le dispositif utilisé pour détecter le courant d'oxydation d'un oxyde métallique et pour quantifier la limite du voltage de fonctionnement du polymère. Les références utilisées dans la Figure 5 sont : 28 pour lithium, 30 pour SPE, 32 pour carbone de Shawinigan et 34 pour liant (polymère à 4 branches).

La cathode utilisée pour les mesures est un composite de polymère et de carbone à grande surface épandu sur un collecteur de courant en aluminium. Grâce à la surface développée par le carbone, ce matériau joue le rôle de détecteur et peut déceler n'importe quel courant d'oxydation avec une intensité aussi faible qu'environ 2 microampères. L'électrolyte sous forme solide ou sous forme liquide, imbibée dans une membrane de type polyoléfine microporeuse, comme le Celgard^{®}, est stable à haut voltage.

L'anode est composée de lithium métallique qui sert comme électrode de référence et comme contre-électrode.

La méthode électrochimique utilisée est la cyclovoltamétrie lente mise en oeuvre avec une vitesse de balayage de 10 mV/h. Cette méthode illustre le courant d'oxydation en fonction du voltage : à chaque fois que le courant se rapproche de zéro, le voltage de fonctionnement du polymère est stable.

La valeur de la stabilité électrochimique est définie comme la valeur de la tension appliquée au système lorsque l'on observe le changement brusque dans la courant/voltage (I fonction de V).

### Modèle de la stabilité chimique comme test préliminaire de la stabilité électrochimique du polymère d'enrobage

La stabilité du polymère utilisé en tant qu'électrolyte dans la cathode est déterminée par la préparation d'un échantillon de solution d'épandage contenant l'oxyde, le polymère, le sel et le solvant d'épandage. Un échantillon de cette solution est prélevé (0,3 grammes) et mis dans une bouteille échantillon de 40 ml, le solvant est alors évaporé en mettant les divers échantillons sous vide durant une nuit. Les bouteilles-échantillon sont scellées, sous une atmosphère d'argon, puis transférées dans une étuve pour un traitement à 80°C. Un suivi de la stabilité du polymère en fonction du temps a été effectué en dissolvant la cathode dans le THF, puis en l'injectant après filtration dans un système GPC afin de déterminer la masse moléculaire et la polydispersité du polymère extrait. Ces résultats sont par la suite comparés avec les résultats d'un polymère n'ayant subi aucun traitement thermique.

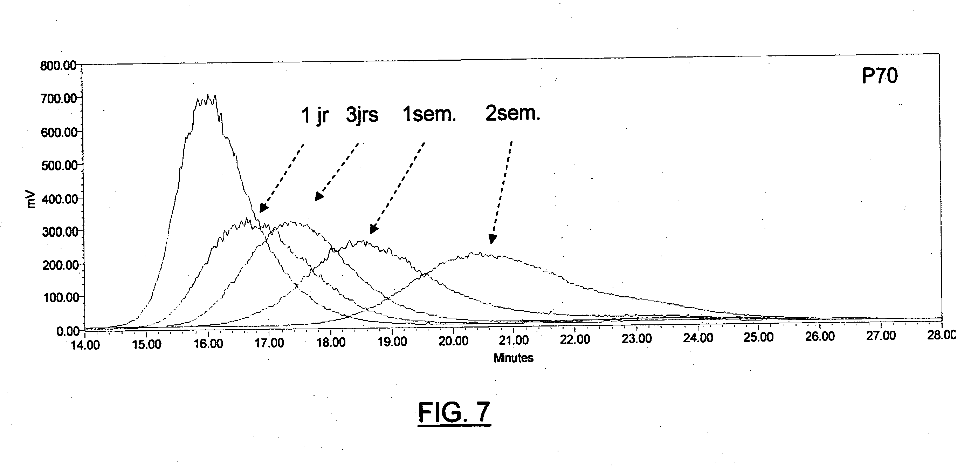

Les résultats sont présentés, dans les Figures 7 à 9, sous forme de courbes GPC comparative. La Figure 7 présente l'évolution de la masse moléculaire d'un polymère standard en fonction du temps, après traitement thermique. Cette figure démontre qu'après moins de deux heures, à 80°C, en présence d'oxyde de vanadium en OCV (open circuit voltage) à 3,55 Volts, le polymère amorce une dégradation significative. Cette dégradation se poursuit jusqu'à ce que le polymère soit totalement dégradé. Cette étape est atteinte en moins de 2 jours.

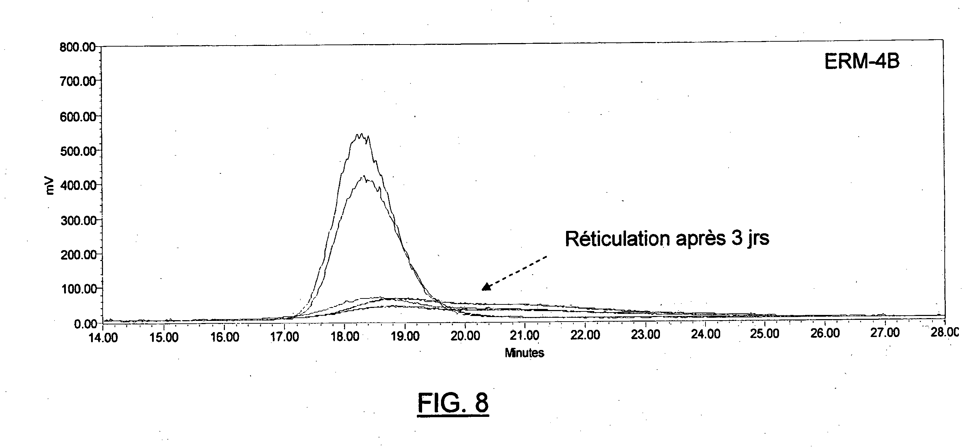

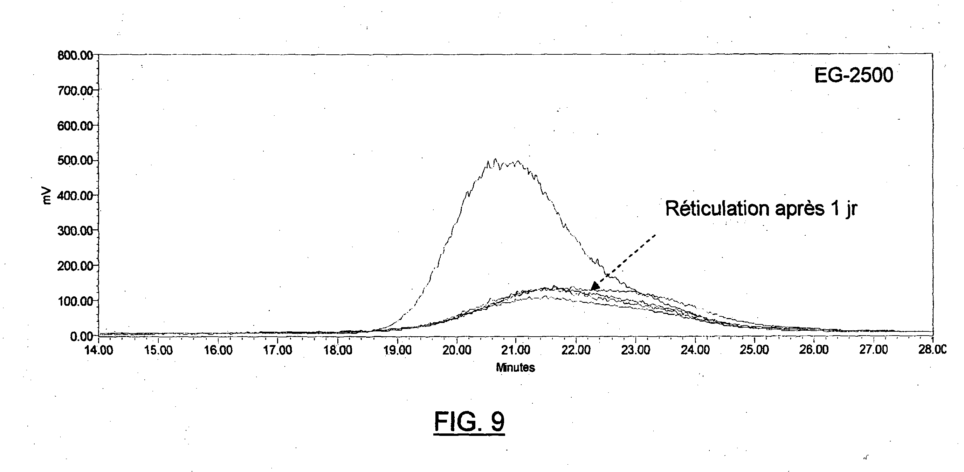

Les Figures 8 et 9 présentent l'évolution de la masse moléculaire de nouveaux polymères (respectivement le ERM-4B et le EG-2500) dans les mêmes conditions de dégradation. Ces figures démontrent, pour ces deux polymères, que les échantillons de cathodes extraits demeurent stables pour une période de plus de 2 heures, à 80°C. Par la suite, on observe une diminution du taux d'extraction bien que la masse moléculaire et la polydispersité de l'extrayant demeurent stables. Après plus de 3 jours ERM-4Branches (aussi appelé 4 branches) et d'une journée respectivement pour le EG-2500, les polymères sont totalement réticulés et ne présentent aucun signe de dégradation. Seul les sous-produits liés à la réaction de réticulation sont alors extraits et analysés par GPC.

Par ces analyses de stabilité, effectuées à plusieurs températures, il est possible de conclure que les nouveaux polymères du type ERM-4B ou EG-2500 sont nettement plus stable à l'oxydation qu'un oxyde de vanadium et, qu'avec le temps, il est possible de réticuler in-situ ces électrolytes, dans la cathode, et que ce réseau demeure stable sur plusieurs semaines à haute température (80 ou 110°C).

En conclusion, on considérera qu'un polymère est stable chimiquement si la diminution de son poids moléculaire, après avoir été soumis à un traitement thermique à 80°C pendant 1 jour, n'a pas diminué de plus de 10 %.

On considère, dans ces conditions, qu'un polymère est très stable si la diminution de son poids moléculaire est inférieure à 5 % dans les mêmes conditions.

On considère, comme extrêmement stable, un polymère dont la diminution de poids moléculaire, après avoir été soumis à un traitement thermique à 80°C pendant 3 semaines, n'a pas diminué de plus de 5 %.

Les polymères stables chimiquement, préférentiellement les polymères moyennement stables et plus préférentiellement ceux qui sont classifiés, selon ce test, comme très stables sont avantageusement utilisés dans le cadre de la présente invention pour constituer l'enrobage des particules d'oxydes métalliques solubles.

### Définition du taux de solubilité d'un oxyde métallique présent dans la cathode d'un système électrochimique

Dans le cadre de la présente invention, on appelle taux de solubilité (ts) de l'oxyde métallique, à temps fixe, le pourcentage de particules d'oxyde métallique initialement présentes dans la cathode qui migrent vers l'électrolyte et vers l'anode.

Un exemple de mise en oeuvre de la méthode pour la mesure du taux de solubilité de l'oxyde de vanadium et de la méthode de calcul du taux de dissolution de vanadium est donné ci-après.

Une vue en section d'une batterie de lithium (Lithium/SPE/Cathode) est observée au microscope avant cyclage et après cyclage.

Avant cyclage - grâce au EDX (Énergie Dispersive des rayons X) couplé sur un microscope électronique à balayage qui trace la carte ("mapping") de la surface de l'élément vanadium dans la cathode. Cette surface est considérée comme la référence 100 % et lorsque on analyse la carte de vanadium sur le séparateur (SPE) et le lithium, aucune trace ou surface de vanadium n'est détectée. On parle de 0 % de vanadium dissous.

Après Cyclage - La surface de la carte ("mapping") de vanadium sur le SPE et le lithium est de 5 %, c'est à dire qu'avant cyclage, la carte de vanadium de la cathode correspond à une surface de 15 cm * 15 cm = 225 cm². Après cyclage la surface de vanadium trouvée sur le SPE et la surface du Lithium est de 11, 5 cm².

Ce comptage permet d'évaluer le taux de vanadium qui est équivalent à 5 % de vanadium dissous.

### Définition du critère de conductivité et/ou de non conductivité d'un polymère

La conductivité électrique d'une substance, aussi appelée aptitude d'une surface à conduire un courrant électrique, est définie comme étant l'inverse de la résistivité : σ = 1/p. Comme l'intensité du champ électrique dans le matériau s'exprime par la relation E=V/L, la loi d'Ohm peut s'écrire en termes de densité de courant par la formule J= σE. On considère comme métaux conducteurs ceux dont le σ >10⁵ (Ω.m)⁻¹. On considère comme matériaux semi-conducteurs ceux qui vérifient la relation : 10⁻⁶< σ < 10⁵ (Ω.m)⁻¹. On considère comme matériaux isolants ceux vérifiant la relation σ <10⁻⁶ (Ω.m)⁻¹.

Dans le cadre de la présente invention on classifie comme polymères conducteurs ceux qui ont une conductivité supérieure à 10⁻⁵ (Ω.m)⁻¹ et comme polymères non conducteurs ceux qui ont une conductivité inférieure ou égale à 10⁻⁶ (Ω.m)⁻¹.

### Paramètres de fabrication de générateurs électrochimiques incorporant des particules d'oxyde métallique enrobées de l'invention

Le générateur ou batterie électrochimique est formé d'au mois 3 films, jouant respectivement le rôle d'anode, d'électrolyte et de cathode.

Anode - Il s'agit d'un film de lithium ou de lithium allié, ou de lithium carbone. De préférence le film est de lithium.

Électrolyte (SPE) - Il s'agit d'un film polymère sec sans aucun solvant. Sa nature dépend de l'oxyde de la cathode.

### Pour les oxydes opérant de 1 à 3,6 Volts

Ce cas correspond au voltage lié au potentiel à la mi-décharge/100 heures, le voltage d'opération de l'oxyde est relié au potentiel à la mi-décharge en C/100 (décharge en 100 heures).

À titre d'exemple : Li₄Ti₅O₁₂ (1,5 Volts), LiV₃O₈ (2,55 Volts). Dans ce cas le SPE peut être de la même nature que le polymère enrobant, ou de nature différente, c'est à dire caractérisé par une stabilité inférieure ou égale à 3,7 volts.

### Pour les oxydes opérant de 3 et 5 Volts

Dans ce cas, le SPE doit préférablement être de la même nature que le polymère enrobant l'oxyde : par exemple LiCoO₂ (3,6 Volts) et/ou LiFePo₄ (3,5 Volts).

Cathode - Elle est formée d'un oxyde soluble ou non soluble, de préférence l'oxyde est soluble avec un enrobage de type polymère stable d'une stabilité électrochimique supérieure ou égale à 3,7 Volts.

Le liant peut être de la même nature que l'enrobant de l'oxyde, lorsque le potentiel de l'oxyde varie de 3 à 5 Volts.

### EXEMPLES

Les exemples suivants sont donnés à titre purement illustratif et ne sauraient être interprétés comme constituant une quelconque limitation des objets de la présente invention.

Le tableau I ci-dessus résume les paramètres de préparation des particules selon les exemples 1 à 11 qui suivent.

### Exemple 1

Un mélange de carbone de Shawinigan (0,91grammes), avec un polymère polyéther P70 avec un MW de 70 000 (2,63 grammes) et avec un sel de LiTFSI (0,78 grammes), est préparé.

Ce mélange de 3 composants est ajouté à 27,3 ml d'acétonitrile, le tout est homogénéisé dans un Jar Milling pendant 24 heures.

La solution est épandue sur un support d'aluminium d'une épaisseur de 17 µm par mise en oeuvre de la méthode du Doctor Blade. L'électrode ainsi préparée est séchée sous vide à 90°C, pendant 24 heures. Une électrode de 37 micromètres d'épaisseur est obtenue. Cette électrode est nommée P70-carb1.

Un mélange de carbone de Shawinigan (0,73 grammes), avec un polymère 4 branches Elexcel TA210 (2,06 grammes) et avec un sel de LiTFSI (0,58 grammes), est préparé. Les 3 composants du mélange sont alors mélangés à 28,9 ml d'acétonitrile. Puis le mélange est homogénéisé dans un "jar milling" pendant 24 heures.

La solution est épandue sur un support d'aluminium à l'aide de la méthode de Doctor Blade. L'électrode obtenue sera séchée sous vide à 90°C. L'épaisseur de cette électrode est de 35 microns. Cette électrode est nommée 4B-carb1.

La batterie est montée comme suit :
- Lithium / électrolyte 1 / 4B - carbone 1 = Cell 1
- Lithium / électrolyte 2 /P70 - carbone 1 = Cell 2

Le lithium est constitué d'un film d'épaisseur 55 microns. L'électrolyte 1 est de nature 4 branches avec une épaisseur de 20 micromètres. L'électrolyte 2 est de nature P70 avec une épaisseur de 20 micromètres.

Les batteries Cell1 et Cell2 sont mises dans une étuve à 80°C et connectées à un Mac Pile en mode potentiostatique. Une cyclovoltamétrie lente est appliquée au Cell1 et Cell2, avec une vitesse de balayage de 10 mV/h.

La batterie Cell1 montre que le polymère 4 branches (Figure 6) est stable, jusqu'à un voltage de 4,1 Volts.

La batterie Cell2 montre que le polymère P70 (Figure 6) présente une faible vague de dégradation autours de 3,3-3,6 Volts qui est suivie d'un premier pic de dégradation vers 3,74 Volts.

### Exemple 2 - avec polymère P70

8,04 grammes de LiV₃O₈ 0,43 grammes de carbone Ketjen, 325 grammes de polymère P70 et 0,90 grammes de LiTFSI et 27 ml d'acétonitrile sont mélangés dans un "jar milling", pendant 24 heures, après évaporation du solvant. Les résultats sont présentés dans la Figure 7 sous forme de courbe GPC comparative. La Figure 7 présente l'évolution de la masse moléculaire du polymère, en fonction de la durée du traitement thermique. Cette figure démontre qu'à partir de deux heures à 80°C, en présence d'oxyde de vanadium à 3,55 Volts, le polymère amorce une dégradation significative. Cette dégradation se poursuit jusqu'à ce que le polymère soit complètement dégradé, ce qui est finalement atteint en moins de 2 semaines.

### Exemple 3 - avec polymère 4 branches

8 grammes de LiV₃O₈, 0,42 grammes de carbone Ketjen, 3,25 grammes de polymères 4 branches et 0,90 grammes de LiTFSI sont mélangés avec 27 ml d'acétonitrile, pendant 24 heures, dans un "jar milling".

Après évaporation à 80°C de l'acétonitrile, les mesures réalisées sur le mélange de particules, et qui sont rapportées dans la Figure 8, mettent en évidence l'évolution de la masse moléculaire de nouveaux polymères 4B, dans les mêmes conditions de dégradation que dans l'exemple 2.

La Figure démontre, pour ce polymère, que les échantillons de cathodes extraits demeurent stables pour une période de plus de 2 heures, à 80°C. Par la suite, on observes une diminution du taux d'extraction, et ce, bien que la masse moléculaire et la polydispersité de l'extrayant demeurent stables. Après plus de 3 jours, le ERM-4B est totalement réticulé et ne présente aucun signe de dégradation.

Seuls les sous-produits liés à la réaction de réticulation sont alors extraits et analysés par GPC.

### Exemple 4 - avec polymère EG 2500

8 grammes de LiV₃O₈, 0,43 grammes de carbone Ketjen, 3,25 grammes de polymère EG-2500 et 0,90 grammes de LiTFSI, sont mélangés avec 27 ml d'acétonitrile dans un Jar Milling, pendant 24 heures.

Après évaporation de l'acétonitrile à 80°C, les mesures réalisées et rapportées dans la Figure 8 mettent en évidence l'évolution de la masse moléculaire du polymère EG-2500, dans les mêmes conditions de dégradation que les exemples 2 et 3. La figure démontre par ailleurs, pour ce polymère, que les échantillons de cathodes extraits demeurent stables pour une période de plus de 2 heures à 80°C. Par la suite, on observe une diminution du taux d'extraction et ce, bien que la masse moléculaire et la polydispersité de l'extrayant demeurent stables. Après plus d'une journée, le polymère EG-2500 est totalement réticulé et ne présente aucun signe de dégradation.

Seuls les sous-produits liés à la réaction de réticulation sont alors extraits et analysés par GPC.

### Exemple 5 - polymère P70 avec oxyde LiV₃O₈/pH inférieur à 7

8,04 grammes de LiV₃O₈ et 0,43 grammes de carbone Ketjen sont mélangés à sec par mécanofusion pendant 45 minutes. Le cobroyé LiV₃O₈-carbon ainsi obtenu est mélangé avec 3,25 grammes de polymère P70 et 0,904 grammes de LiTFSI, auxquels on ajoute 27 ml d'acétonitrile; ce mélange est introduit dans un récipient métallique dont 1/3 en volume est occupé par la solution, 1/3 par des billes d'acier et 1/3 du volume est libre. L'enrobage est obtenu par HEBM, pendant 30 minutes, à 25°C.

La solution est épandue, sur un collecteur de courant en aluminium, par mise en oeuvre de la méthode du Doctor Blade. L'électrode est séchée sous vide pendant 24 heures. L'électrode obtenue présente une épaisseur de 45 micromètres. Le montage de pile est effectué comme suit : Lithium/SPE/-P70/LVO-P70.

La capacité de la cellule est de 5 mAh, la batterie est maintenue à 80°C pendant 2 semaines, en mode potentiostatique à 3,6 Volts.

La capacité a chuté de 25 % (3,75 mAh), cette perte de capacité est reliée directement à la dissolution de LiV₃O₈dont le pH est inférieur à 7.

### Exemple 6 - polymère à 4 branches avec LiV₃O₈/pH de 7

8,04 grammes de LiV₃O₈ et 0,43 grammes de carbone Ketjen sont mélangés à sec par mécanofusion pendant 45 minutes. Ce cobroyé LiV₃O₈-carbon est mélangé avec 3,25 grammes du polymère 4 branches (Elexcel TA-210) et 0,904 de LiTFSI, auxquels on ajoute 24,7 ml d'acétonitrile. Le mélange ainsi obtenu est introduit dans un récipient métallique dont 1/3 en volume est occupé par la solution de ce mélange, 1/3 par des billes d'acier et 1/3 du volume reste libre. L'enrobage est obtenu par HEBM, pendant 30 minutes, à 25°C.

La solution est épandue sur un collecteur de courant en aluminium, par la méthode du Doctor Blade. L'électrode est séchée sous vide pendant 24 heures, l'électrode a une épaisseur de 45 micromètres. Le montage de la pile est effectué comme suit : Lithium/SPE/-4Branches/LVO-4branches.

La capacité de la cellule est de 5,5 mAh, la batterie est maintenue à 80°C pendant 2 semaines en mode potentiostatique, à 3,6 Volts.

La capacité alors mesurée est de 5,2 mAh. La perte de capacité est de 1 % qui est la limite de l'erreur de la capacité. Ce qui prouve que LiV₃O₈ n'est pas dissout.

### Exemple 7 - EG avec LVO - EG

8,04 grammes de LiV₃O₈ et 0,43 grammes de carbone Ketjen sont mélangés à sec par mécanofusion pendant 45 minutes. Ce cobroyé LiV₃O₈-carbon est mélangé avec 3,25 grammes de polymère EG et 0,904 de LiTFSI, auxquels on ajoute 45 ml d'acétonitrile; ce mélange est introduit dans un récipient métallique dont 1/3 en volume est constitué par la solution de ce mélange, 1/3 par des billes d'acier d'un diamètre de 6,34 mm et 1/3 volume reste libre. L'enrobage est obtenu par HEBM pendant 30 minutes à 25°C.

La solution est épandue sur un collecteur de courant en aluminium, par la méthode du Doctor Blade. L'électrode LVO-EG obtenue est séchée sous vide pendant 24 heures. L'électrode présente une épaisseur de 45 micromètres. Le montage de pile est effectué comme suit : Lithium/SPE-EG/-/LVO-EG.

La capacité de la cellule est de 5,5 mAh, la batterie est maintenue à 80°C, pendant 2 semaines, en mode potentiostatique à 3,6 Volts.

La capacité a alors chuté de 25 % (4,1 mAh). Cette perte de capacité est reliée directement à la dissolution de LiV₃O₈ dont le pH est inférieur à 7.

### Exemple 8 - P70 avec LiFePO₄ / pH supérieur à 7

8 grammes de LiFePO₄ et 0,45 grammes de carbone Ketjen sont mélangés à sec par mécanofusion pendant 45 minutes. Ce cobroyé LiFePO₄-carbone est mélangé avec 3,25 grammes de polymère P70 et 0,9 de LiTFSI, auxquels on ajoute 45 ml d'acétonitrile. Ce mélange est introduit dans un récipient métallique dont 1/3 en volume est rempli de la solution de ce mélange, 1/3 par des billes d'acier d'un diamètre de 6,34 mm et 1/3 du volume reste libre. L'enrobage est obtenu par HEBM pendant.30 minutes à 25°C.

La solution est épandue sur un collecteur de courant en aluminium, par mise en oeuvre de la méthode du Doctor Blade. L'électrode LiFePO₄-P70 obtenue est séchée sous vide pendant 24 heures. L'électrode présente une épaisseur de 45 micromètres. Le montage de pile est effectué comme suit : Lithium/SPE-P70/-/LVO-P70.

La capacité de la cellule est de 4,5 mAh, la batterie est maintenue à 80°C, pendant 2 semaines, en mode potentiostatique à 3,63 Volts.

La capacité a alors chuté de 27 % (4,28 mAh). Cette perte de capacité est reliée directement à la non stabilité en oxydation du polymère P70.

Lorsque la batterie est maintenue à 80°C pendant 2 semaines, en mode potentiostatique à 4,00 Volts, la capacité chute de 51 % (2,2 mAh). Cette perte de capacité est reliée directement à la non stabilité en oxydation du polymère P70.

### Exemple 9 - 4 branches avec LiFePO₄/pH supérieur à 7

78 grammes de LiFePO₄ et 0,45 grammes de carbone Ketjen sont mélangés à sec, par mécanofusion, pendant 45 minutes. Ce cobroyé LiFePO₄-carbone est mélangé avec 3,25 grammes de polymère 4 Branches et 0,9 de LiTFSI, auxquels on ajoute 45 ml d'acétonitrile; ce mélange est introduit dans un récipient métallique dont 1/3 en volume est rempli par la solution du mélange, 1/3 de billes d'acier d'un diamètre de 6,34 mm et 1/3 du volume reste libre. L'enrobage est obtenu par HEBM, pendant 30 minutes, à 25°C.

La solution est épandue sur un collecteur de courant en aluminium, par mise en oeuvre de la méthode du Doctor Blade, l'électrode LiFePO₄-4B est séchée sous vide pendant 24 heures, l'électrode a une épaisseur de 45 micromètres. Le montage de pile est effectué comme suit : Lithium/SPE-EG/-/LiFePO₄-4B.

La capacité de la cellule est de 4,5 mAh. La batterie est maintenue à 80°C pendant 2 semaines en mode potentiostatique à 3,63 Volts.

La capacité reste inchangée (4,5 mAh), le maintien de la capacité est relié directement à la stabilité en oxydation du polymère 4 branches.

Lorsque la batterie est maintenue à 80°C pendant 2 semaines en mode potentiostatique à 4, 00 Volts, la perte de capacité est de 1 % (4,45 mAh). Cette perte de capacité est reliée directement à la non stabilité en oxydation du polymère.

Le maintien de la capacité est relié directement à la stabilité en oxydation du polymère 4 Branches (4B).

### Exemple 10 - 4 branches avec LiFeP04/pH supérieur à 7

78 grammes de LiFePO₄, et 0,45 grammes de carbone Ketjen, sont mélangés à sec par mécanofusion pendant 45 minutes. Ce cobroyé LiFePO₄-carbone est mélangé avec 3,25 grammes de polymère EG-2500 et 0,9 grammes de LiTFSI, auxquels on ajoute 45 ml d'acétonitrile. Ce mélange est introduit dans un récipient métallique dont 1/3 en volume est occupé par la solution de ce mélange, 1/3 par des billes d'acier d'un diamètre de 6,34 mm et 1/3 du volume reste libre. L'enrobage est obtenu par HEBM, pendant 30 minutes, à 25°C.

La solution est épandue sur un collecteur de courant en aluminium, par mise en oeuvre de la méthode du Doctor Blade. L'électrode LiFePO₄-4B est séchée sous vide pendant 24 heures, l'électrode présente une épaisseur de 45 micromètres. Le montage de pile est effectué comme suit : Lithium/SPE-EG/- /LiFePO₄-4B.

La capacité de la cellule est de 4,5 mAh, la batterie est maintenue à 80°C, pendant 2 semaines, en mode potentiostatique à 3,63 Volts.

La capacité reste inchangée (4,5 mAh). Le maintien de la capacité est relié directement à la stabilité en oxydation du polymère 4 branches.

Lorsque la batterie est maintenue à 80°C pendant 2 semaines, en mode potentiostatique à 4, 00 Volts, la perte de capacité est de 1 % (4,45 mAh). Cette perte de capacité est reliée directement à la non stabilité en oxydation du polymère.

Le maintien de la capacité est relié directement à la stabilité en oxydation du polymère 4 branches.

### Exemple 11 - EG2500 avec LiFePO₄ /pH supérieur à 7

78 grammes de LiFePO₄ et 0,45 grammes de carbone Ketjen sont mélangés à sec par mécanofusion pendant 45 minutes. Le cobroyé LiFePO₄-carbone obtenu est mélangé avec 3,25 grammes de polymère EG-2500 et 0,9 de LiTFSI, auxquels on ajoute 45 ml d'acétonitrile. Le mélange ainsi obtenu est introduit dans un récipient métallique dont 1/3 en volume est rempli de la solution de ce mélange, 1/3 par des billes d'acier d'un diamètre de 6,34 mm, et 1/3 du volume reste libre. L'enrobage est obtenu par HEBM, pendant 30 minutes, à 25°C.

La solution est épandue sur un collecteur de courant en aluminium d'une épaisseur de 17 µm, par mise en oeuvre de la méthode du Doctor Blade. L'électrode LiFePO₄-4B est séchée sous vide pendant 24 heures, elle présente une épaisseur de 45 micromètres. Le montage de la pile est effectué comme suit : Lithium/SPE-EG/-/LlFEPO₄-polymère 4B.

La capacité de la cellule est de 4,5 mAh. La batterie est maintenue à 80°C, pendant 2 semaines, en mode potentiostatique à 3,63 Volts.

### La capacité reste inchangée (4,5 mAh), le maintien de la capacité est relié directement à la stabilité en oxydation du polymère 4 branches.

Lorsque la batterie est maintenue à 80°C pendant 2 semaines en mode potentiostatique à 4,00 Volts, la perte de capacité est de 1 % (4,45 mAh). Cette perte de capacité est reliée directement à la non stabilité en oxydation du polymère.

Le maintien de la capacité est relié directement à la stabilité en oxydation du polymère EG.

Le matériau constitué des particules enrobées de l'invention s'avère posséder d'excellentes propriétés électrochimiques, notamment en ce qui concerne la durée de vie des batteries dans lesquelles on l'incorpore et en raison de son intérêt économique.

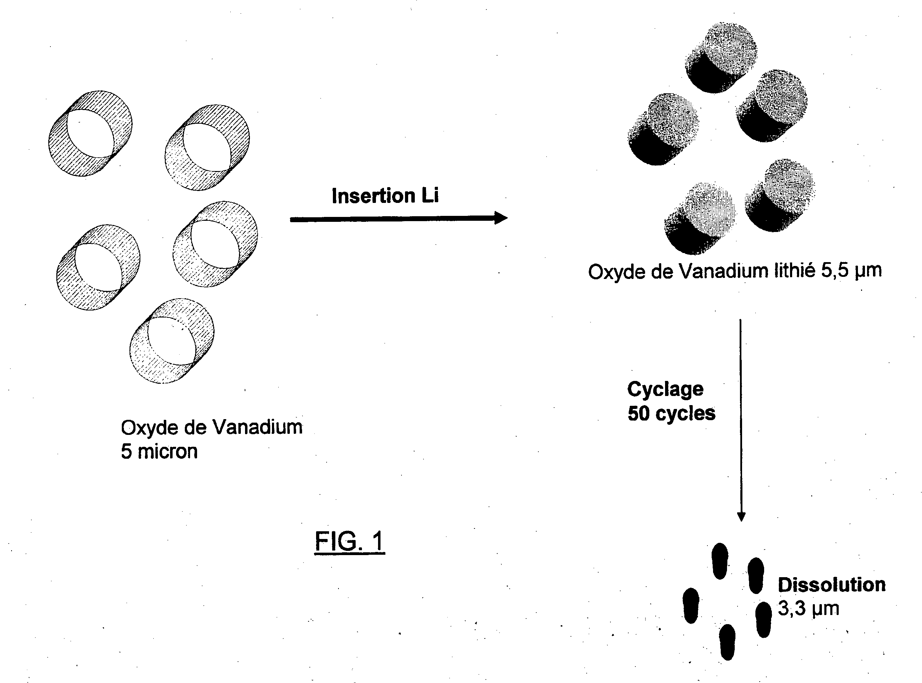

La Figure 1 illustre le phénomène de dissolution observé pour de petites particules, non enrobées, à base de vanadium oxyde lithié et de formule LiV₃O₈. L'insertion de Li dans l'oxyde de vanadium provoque une augmentation volumique des particules; à l'origine d'une taille moyenne de 5 micromètres (D50). Les particules lithiées possèdent une taille moyenne de 5,5 micromètres (D55), ce qui correspond à une augmentation de taille de 3 à 4 %. Après 50 cycles, les particules d'oxyde métallique présentent une taille moyenne plus faible qui est de 3,5 micromètres.

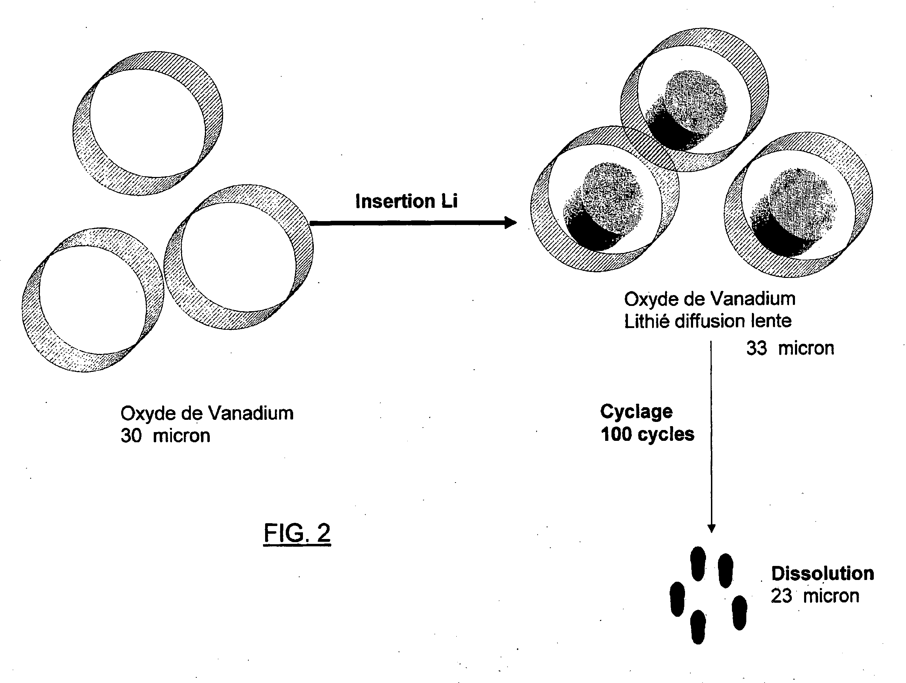

La Figure 2 illustre le phénomène de dissolution de grosses particules, non enrobées, à base de vanadium oxyde lithié. L'insertion de Li dans l'oxyde de vanadium provoque une augmentation volumique des particules. Les particules lithiées possèdent une taille moyenne de 33 micromètres. Après 100 cycles, les particules d'oxyde métallique présentent une taille moyenne de 23 micromètres.

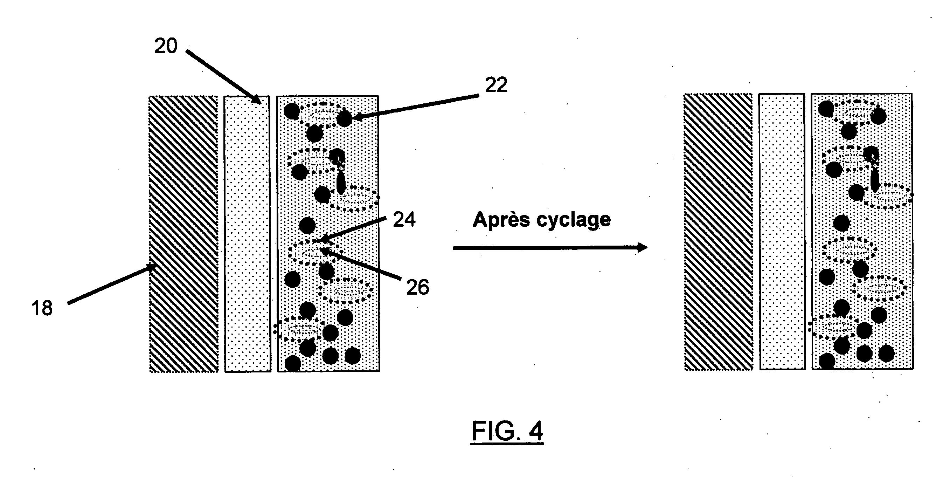

La Figure 4 visualise le comportement d'une électrode selon l'invention, dans laquelle les particules de l'oxyde métallique ont été enrobées par un polymère stable qui ralentit la dissolution du vanadium dans l'électrode. Les références utilisées dans la Figure 4 sont : 18 pour lithium, 20 pour SPE, 22 pour carbone Ketjen, 24 pour (polymère 4 branches) enrobant l'oxyde et 5 pour noyau d'oxyde.

## Revendications

1. Matériau d'électrode constitué par des particules comprenant un noyau et un enrobage qui recouvre au moins en partie la surface dudit noyau, lesdites particules étant **caractérisées en ce que** :
- ledit noyau est composé pour au moins 90 % en poids d'un oxyde métallique choisi dans le groupe constitué par LiMn₂O₄, V₂O₅, LiMn₍₂₋ₓ₎VₓO₄ 0≤x≤1, V₆O₁₃, et LiV₃O₈;
- l'enrobage du noyau est à base d'un polymère dont la stabilité électrochimique est supérieure ou égale à 3,7 Volts, ledit polymère étant un polymère non conducteur électronique choisi parmi les polymères à 3 branches ou à 4 branches ; et
- l'enrobage a une épaisseur moyenne comprise entre 500 nanomètres et 2 micromètres et le noyau recouvert est d'une taille moyenne d₅₀ entre 500 nanomètres et 40 micromètres.

2. Matériau selon la revendication 1, dans lequel le noyau des particules comporte de 1 à 12 %, d'un carbone choisi dans le groupe constitué par le noir d'éthylène, le graphite naturel, le graphite artificiel, le carbone de Shawinigan, le carbone de Ketjen, et les mélanges d'au moins deux d'entre eux.

3. Matériau selon l'une quelconque des revendications 1 à 2, dans lequel l'enrobage du noyau est à base :
- d'un ou de plusieurs polymères salés par au moins un sel choisi dans le groupe constitué par LiFSI, LiTFSI, LiBETI, LiDCTA, LiBF₄ et LiPF₆ ; et
- d'au maximum 10 % d'une charge choisie dans le groupe constitué par SiO₂, ZrO₂ et Al₂O₃, et les mélanges d'au moins deux d'entre eux.

4. Matériau selon la revendication 1, **caractérisé en ce que** chacune des branches du polymère à 3 ou 4 branches a un groupe terminal acrylate, alkoxy, ou vinyle.

5. Matériau selon la revendication 1, **caractérisé en ce que** le polymère est un polyéther en étoile ayant 4 branches qui ont des groupes terminaux choisis parmi les groupes acrylate, méthacrylate, alcoxy, allyloxy et vinyloxy.

6. Matériau selon l'une quelconque des revendications 1 à 4, dans lequel l'oxyde métallique est un mélange (50: 50) de LiV₃O₈ et de V₂O₅.

7. Matériau selon la revendication 1, **caractérisé en ce que** les particules comportent un noyau de LiV₃O₈ ou de V₂O₅ d'une taille de 5 microns, recouvert pour 80% de sa surface par un enrobage d'un polymère de type 4 branches qui a une épaisseur moyenne comprise entre 10 nanomètres et 5 micromètres, et **en ce que** le ts est inférieur à 5%.

8. Procédé de préparation d'un matériau d'électrode selon l'une quelconque des revendications 1 à 7, consistant à préparer un mélange du polymère et d'un oxyde métallique, dans des proportions en poids de 10 à 90%, pour chacun des constituants du mélange, ledit mélange étant éffectué :
- par voie sèche, sans solvant ; ou
- en ajoutant au moins un solvant choisi dans le groupe constitué par l'acétone, l'acétonitrile, le toluène, MEK, NMP ou les mélanges d'au moins deux d'entre eux, le solvant représentant de 10 à 80%, du volume total du solvant et du mélange de polymère et d'oxyde.

9. Électrode constituée par un support d'électrode en matériau métallique ou en matériau plastique conducteur, ledit support étant au moins partiellement recouvert par un matériau d'électrode selon l'une des revendications 1 à 7.

10. Électrode selon la revendication 9, dans laquelle le matériau contient en outre un polymère qui est différent du polymère constituant l'enrobage et qui agit en tant que liant entre les particules de la cathode.

11. Électrode selon l'une quelconque des revendications 9 à 10, comprenant au moins un polymère contenant au moins un sel de lithium et au moins un carbone de surface spécifique supérieure ou égale à 1 m²/g.

12. Électrode selon la revendication 9 à 11, dans laquelle :
- la teneur en polymère représente de 1 à 70 % en poids par rapport au poids total du mélange (polymère + sel + oxyde + carbone) ;
- la teneur en carbone représente de 1 à 10 % en poids par rapport au poids total du mélange (polymère + sel + oxyde + carbone) ;
- la concentration du sel dans le mélange (polymère-oxyde-sel-carbone), est comprise entre 0,1 M et 3 M, de préférence entre 0,7 M et 2 M par rapport au polymère,

13. Générateur électrochimique contenant au moins un élément constitutif comprenant un matériau d'électrode tel que défini dans l'une quelconque des revendications 1 à 7.

## Patentansprüche

1. Elektrodenmaterial, das von Partikeln gebildet ist, die einen Kern und einen Mantel umfassen, der die Überfläche des Kerns mindestens teilweise bedeckt, wobei die Partikel **dadurch gekennzeichnet sind, dass**:
- sich der Kern zu mindestens 90 Gew.-% aus einem Metalloxid zusammensetzt, das aus der Gruppe ausgewählt ist, die von LiMn₂O₄, V₂O₅, LiMn₍₂₋ₓ₎VₓO₄ 0 ≤ x ≤ 1, V₆O₁₃ und LiV₃O₈ gebildet ist,
- der Mantel des Kerns auf der Basis eines Polymers ist, dessen elektrochemische Stabilität über oder gleich 3,7 Volt ist, wobei das Polymer ein nicht leitendes elektronisches Polymer ist, das aus den Polymeren mit 3 Verzweigungen oder mit 4 Verzweigungen ausgewählt ist, und
- der Mantel eine mittlere Dicke zwischen 500 Nanometern und 2 Mikrometern inklusive hat und der bedeckte Kern eine durchschnittliche Größe d₅₀ zwischen 500 Nanometern und 40 Mikrometern hat.

2. Material nach Anspruch 1, wobei der Kern der Partikel von 1 bis 12 % eines Kohlenstoffs aufweist, der aus der Gruppe ausgewählt ist, die von dem Ethylenruß, dem natürlichen Graphit, dem künstlichen Graphit, dem Shawinigankohlenstoff, dem Ketjenkohlenstoff und den Gemischen von mindestens zwei von ihnen gebildet ist.

3. Material nach einem der Ansprüche 1 bis 2, wobei der Mantel des Kerns basiert auf:
- einem oder mehreren Polymeren, die durch mindestens ein Salz gesalzen sind, das aus der Gruppe ausgewählt ist, die von LiFSI, LiTFSI, LiBETI, LiDCTA, LiBF₄ und LiPF₆ gebildet ist,
- maximal 10 % einer Charge, die aus der Gruppe ausgewählt ist, die von SiO₂, ZrO₂ und Al₂O₃ und den Gemischen von mindestens zwei von ihnen gebildet ist.

4. Material nach Anspruch 1, **dadurch gekennzeichnet, dass** jede der Verzweigungen des Polymers mit 3 oder 4 Verzweigungen eine terminale Acrylat-, Alkoxy- oder Vinylgruppe hat.

5. Material nach Anspruch 1, **dadurch gekennzeichnet, dass** das Polymer ein Sternpolyether mit 4 Verzweigungen ist, die terminale Gruppen haben, die aus den Acrylat-, Methacrylat-, Alcoxy-, Allyloxy- und Vinyloxygruppen ausgewählt sind.

6. Material nach einem der Ansprüche 1 bis 4, wobei das Metalloxid ein Gemisch (50 : 50) von LiV₃O₈ und von V₂O₅ ist.

7. Material nach Anspruch 1, **dadurch gekennzeichnet, dass** die Partikel einen Kern aus LiV₃O₈ oder aus V₂O₅ mit einer Größe von 5 Mikron aufweisen, der für 80 % seiner Oberfläche von einem Mantel eines Polymers von Typ 4 Verzweigungen bedeckt ist, der eine mittlere Dicke zwischen 10 Nanometern und 5 Mikrometern inklusive hat, dass der ts kleiner als 5 % ist.

8. Herstellungsverfahren eines Elektrodenmaterials nach einem der Ansprüche 1 bis 7, das darin besteht, ein Gemisch des Polymers und eines Metalloxids in Gewichtsverhältnissen von 10 bis 90 % für jeden der Bestandteile des Gemischs herzustellen, wobei das Gemisch hergestellt wird:
- auf trockenem Weg, ohne Lösungsmittel, oder
- durch Hinzufügen von mindestens einem Lösungsmittel, das aus der Gruppe ausgewählt ist, die von dem Aceton, dem Acetonitril, dem Toluen, MEK, NMP oder den Gemischen von mindestens zwei von ihnen gebildet ist, wobei das Lösungsmittel von 10 bis 80 % des Gesamtvolumens des Lösungsmittels und des Gemischs aus Polymer und Oxid darstellt.

9. Elektrode, die von einem Elektrodenträger aus metallischem Material oder aus leitendem Kunststoffmaterial gebildet ist, wobei der Träger mindestens teilweise von einem Elektrodenmaterial nach einem der Ansprüche 1 bis 7 bedeckt ist.

10. Elektrode nach Anspruch 9, wobei das Material ferner ein Polymer enthält, das sich von dem Polymer unterscheidet, das den Mantel bildet und das als Bindeglied zwischen den Partikeln der Kathode wirkt.

11. Elektrode nach einem der Ansprüche 9 bis 10, die mindestens ein Polymer umfasst, das mindestens ein Lithiumsalz und mindestens einen Kohlenstoff mit einer spezifischen Oberfläche größer oder gleich 1 m²/g enthält.

12. Elektrode nach Anspruch 9 bis 11, wobei:
- der Polymergehalt 1 bis 70 Gew.-% im Verhältnis zum Gesamtgewicht des Gemischs (Polymer + Salz + Oxid + Kohlenstoff) darstellt,
- der Kohlenstoffgehalt 1 bis 10 Gew.-% im Verhältnis zum Gesamtgewicht des Gemischs (Polymer + Salz + Oxid + Kohlenstoff) darstellt,
- die Salzkonzentration in dem Gemisch (Polymer + Salz + Oxid + Kohlenstoff) zwischen 0,1 M und 3 M, vorzugsweise zwischen 0,7 M und 2 M, im Verhältnis zum Polymer ist.

13. Elektrochemischer Generator, der mindestens ein konstituierendes Element enthält, das ein Elektrodenmaterial nach einem der Ansprüche 1 bis 7 umfasst.

## Claims

1. An electrode material formed by particles comprising a core and a coating which covers at least partly the surface of said core, said particles being **characterized in that**:
- said core is composed of at least 90% by weight of a metal oxide selected from the group formed by LiMn₂O₄, V₂O₅, LiMn₍₂₋ₓ₎VₓO₄ 0≤x≤1, V₆O₁₃, and LiV₃O₈;
- the coating of the core is based on a polymer, the electrochemical stability of which is greater than or equal to 3.7 Volts, said polymer being a non-electron-conducting polymer selected from polymers with 3 branches or 4 branches; and
- the coating has an average thickness comprised between 500 nanometers and 2 micrometers and the covered core is of an average size d₅₀ between 500 nanometers and 40 micrometers.

2. The material according to claim 1, wherein the core of the particles include from 1 to 12% of a carbon selected from the group formed by ethylene black, natural graphite, artificial graphite, Shawinigan carbon, Ketjen carbon, and the mixtures of at least two of them.

3. The material according to any one of claims 1 to 2, wherein the coating of the core is based on:
- one or several polymers salted by at least one salt selected from the group formed by LiFSI, LiTFSI, LiBETI, LiDCTA, LiBF₄ and LiPF₆; and
- at most 10% of a filler selected from the group formed by SiO₂, ZrO₂ and Al₂O₃, and mixtures of at least two of them.

4. The material according to claim 1, **characterized in that** each of the branches of the polymer with 3 or 4 branches has an acrylate, alkoxy or vinyl terminal group.

5. The material according to claim 1, **characterized in that** the polymer is a star-shaped polyether with 4 branches which have terminal groups selected from acrylate, methacrylate, alkoxy, allyloxy and vinyloxy groups.

6. The material according to any one of claims 1 to 4, wherein the metal oxide is a (50:50) mixture of LiV₃O₈ and of V₂O₅.

7. The material according to claim 1, characterizing that the particles include a LiV₃O₈ or V₂O₅ core with a size of 5 microns, covered for 80% of its surface with a coating of a polymer of the 4 branch type which has an average thickness comprised between 10 nanometers and 5 micrometers, and in that ts is less than 5%.

8. A method for preparing an electrode material according to any one of claims 1 to 7, consisting in preparing a mixture of the polymer and of a metal oxide, in weight proportions from 10 to 90%, for each of the constituents of the mixture, said mixture being produced:
- via a dry route, without any solvent; or
- by adding at least one solvent selected from the group formed by acetone, acetonitrile, toluene, MEK, NMP or mixtures of at least two of them, the solvent representing from 10 to 80% of the total volume of the solvent and of the mixture of polymer and oxide.

9. An electrode formed by an electrode support in a metal material or in a conducting plastic material, said support being at least partly covered with an electrode material according to one of claims 1 to 7.

10. The electrode according to claim 9, wherein the material further contains a polymer which is different from the polymer forming the coating and which acts as a binder between the particles of the cathode.

11. The electrode according to any one of claims 9 to 10, comprising at least one polymer containing at least one lithium salt and at least one carbon with a specific surface area greater than or equal to 1 m²/g.

12. The electrode according to claim 9 to 11, wherein:
- the polymer content represents from 1 to 70% by weight based on the total weight of the mixture (polymer + salt + oxide + carbon);
- the carbon content represents from 1 to 10% by weight based on the total weight of the mixture (polymer + salt + oxide + carbon);
- the concentration of the salt in the mixture (polymer-oxide-salt-carbon) is comprised between 0.1 M and 3M, preferably between 0.7 M and 2M relatively to the polymer.

13. An electrochemical generator containing at least one constitutive element comprising an electrode material as defined in any one of claims 1 to 7.
